(19) Europäisches Patentamt / European Patent Office / Office européen des brevets

(11) **EP 3 089 416 A1**

(12) **EUROPEAN PATENT APPLICATION**

(43) Date of publication:
02.11.2016 Bulletin 2016/44

(51) Int Cl.:
*H04L 27/26* $^{(2006.01)}$

(21) Application number: 15001299.5

(22) Date of filing: 30.04.2015

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: HARRIS CORPORATION
Melbourne, FL 32919 (US)

(72) Inventors:
• **Moffatt, Christopher Douglas**
  **Palm Bay, FL 32910 (US)**
• **Hoffman, John E.**
  **Indialantic, FL 32903 (US)**
• **Lilley, Richard**
  **Grant, FL 32949 (US)**

(74) Representative: **Schmidt, Steffen J.**
**Wuesthoff & Wuesthoff**
**Patentanwälte PartG mbB**
**Schweigerstrasse 2**
**81541 München (DE)**

(54) **WIRELESS COMMUNICATIONS DEVICE PROVIDING PEAK-TO-AVERAGE POWER RATIO (PAPR) REDUCTION BASED UPON WALSH TRANSFORMATION MATRIX PERMUTATIONS AND RELATED METHODS**

(57)     A wireless communications device using a multi-carrier modulation communication signal may include a transmitter and a controller operable with the transmitter. The controller may be configured to reduce a peak-to-average power ratio (PAPR) associated with the multi-carrier modulation communication signal by at least generating a plurality of intermediate multi-carrier modulation communication signals based upon respective different permutations of a Walsh transformation matrix, and selecting a given intermediate multi-carrier modulation communication signal for transmission as the multi-carrier modulation communication signal based upon a PAPR associated therewith.

**Description**

**Field of the Invention**

The present invention relates to the field of communications, and, more particularly, to wireless data communications and related methods.

**Background of the Invention**

The peak-to-average power ratio ("PAPR"), also known as peak-to-mean power ratio ("PMPR") or peak or crest factor, may be an important characteristic of multi-carrier transmitted signals. The peak of the signal can be N times greater than the average power level, where N is the number of subcarriers. These large peaks may cause intermodulation distortion which can result in an increase in the error rate. These distortions are typically caused by the limitations inherent in a transmitting amplifier.

To prevent the transmitter amplifier from limiting (clipping), the average signal power is typically kept low enough to keep the signal relatively linear through the amplifier. To transmit a high power signal, a high power amplifier may be used which requires a large DC system power. A much higher power amplifier is typically used to transmit multi-carrier waveforms than for constant envelope waveforms. For example, using 64 carrier waveforms, a 40 dBm power amplifier would require about 15 dB of back off. Therefore, instead of operation at 40 dBm (10 watts) the amplifier is only capable of operating at 25 dBm (0.316 Watts). Thus to transmit at the desired 40 dBm, a 55 dBm (316 Watt) amplifier would be needed. In addition, such large power requirements may lead to associated increased space demands and heat dissipation requirements.

With the large amount of interest and activity with Orthogonal Frequency Division Modulation (OFDM), and in particular with IEEE 802.11a and 802.11g communication technology, the PAPR problem is exaggerated. The IEEE 802.11 standard with its use of complex waveforms may require highly linear RF amplifiers. Current IEEE 802.11 physical layer integrated circuits have not implemented PAPR reduction schemes. In particular, multi-tone OFDM typically requires greater than 10 dB power amplifier back-off because of a high peak-to-average power ratio. The net result of these factors may be increased DC power demand beyond that encountered with other IEEE 802.11 techniques. The effect may be less noticeable for short duty cycle signals, but can be significant for situations requiring continuous transmission of data.

OFDM, as mentioned above, is a method of transmitting data simultaneously over multiple equally-spaced and phase synchronized carrier frequencies, using Fourier transform processing for modulation and demodulation. The method has been proposed and adopted for many types of radio systems, such as wireless Local Area Networks ("LAN") and digital audio and digital video broadcasting. OFDM offers many well-documented advantages for multi-carrier transmission at high data rates, particularly in mobile applications. Specifically, it has inherent resistance to dispersion in the propagation channel. Furthermore, when coding is added it is possible to exploit frequency diversity in frequency selective fading channels to obtain excellent performance under low signal-to-noise conditions. For these reasons, OFDM is often preferable to constant envelope modulation with adaptive equalization and is arguably less complex to implement.

The principal difficulty with OFDM, as alluded to above, is that when the sinusoidal signal of the N carriers add mostly constructively, the peak envelope power is as much as N times the mean envelope power. If the peak envelope power is subject to a design or regulatory limit then this has the effect of reducing the mean envelope power allowed under OFDM relative to that allowed under constant envelope modulation. If battery power is a constraint, as is typically the case with portable equipment such as mobile consumer appliances, and laptops, then the power amplifiers required to behave linearly up to the peak envelope power may be operated inefficiently with considerable back-off from compression. Digital hard limiting of the transmitted signal has been shown to alleviate the problem, but only at the cost of spectral sidelobe growth and consequential bit error performance degradation.

Various approaches are sometimes used to address the PAPR issues for OFDM packets. For example, U.S. Pat. No. 7,639,747 to Moffatt et al. (and assigned to Harris Corporation of Melbourne, FL the assignee of the present invention), which is hereby incorporated herein in its entirety by reference, describes a predictive signal producing method that levels transmitter output power in a multi-carrier communication system and results in approaching amplifier performance normally associated with constant carrier waveforms.

Another approach is set forth in U.S. Pat. No. 8,274,921 also to Moffatt et al. and assigned to Harris Corporation, which is hereby incorporated herein in its entirety by reference. This patent discloses a system which communicates data and includes a transmitter for transmitting a communications signal that carries communications data. It includes an efficient modulator for approximating the frequencies of sine/cosine basis waveforms using complex exponential functions and adding and subtracting the complex exponential functions to generate an OFDM communications signal as a plurality of N data subcarriers that carry communications data as data symbols. A receiver receives the OFDM communications signal and includes a demodulation circuit for demodulating the OFDM communications signal using logical shifts of multiples +/-2$^p$ based on complex exponential functions corresponding to sine/cosine basis waveform approximations to extract amplitude and phase values from a plurality of N data subcarriers as data symbols within the OFDM communications signal.

Other approaches are described in U.S. Patent No. 7,496,028 to Jung et al.; U.S. Patent No. 7,301,891 to Park et al.; U.S. Patent No. 6,925,128 to Corral; U.S. Patent No. 8,442,137 to Moffatt et al.; U.S. Patent No. 8,135,081 to Moffatt et al.; U.S. Patent No. 7,903,749 to Moffatt; U.S. Patent No. 7,822,136 to Moffatt et al.; U.S. Patent No. 7,751,488 to Moffatt; and U.S. Patent No. 7,649,951 to Moffatt, which are also hereby incorporated herein in their entireties by reference.

However, there may be a desire to further address the PAPR in some implementations.

## Summary of the Invention

A wireless communications device using a multi-carrier modulation communication signal may include a transmitter and a controller operable with the transmitter. The controller may be configured to reduce a peak-to-average power ratio (PAPR) associated with the multi-carrier modulation communication signal by at least: generating a plurality of intermediate multi-carrier modulation communication signals based upon respective different permutations of a Walsh transformation matrix; and selecting a given intermediate multi-carrier modulation communication signal for transmission as the multi-carrier modulation communication signal based upon a PAPR associated therewith.

More particularly, the controller may be further configured to generate at least one signaling symbol (which may be encrypted) for transmission with the multi-carrier modulation communication signal indicating the respective permutation of the Walsh transformation matrix associated therewith. The controller may select as the given intermediate multi-carrier signal the intermediate multi-carrier modulation communication signal having a lowest PAPR associated therewith, for example. Also by way of example, the controller may select the given intermediate multi-carrier modulation communication signal based upon a PAPR threshold.

The different permutations of the Walsh transformation matrix may comprise different row configurations of the Walsh transformation matrix. By way of example, the multi-carrier modulation communication signal may be an orthogonal frequency-division multiplexing (OFDM) signal. The wireless communications device may further include a quadrature amplitude modulation (QAM) modulator for generating a QAM signal constellation, and the controller may generate the plurality of intermediate multi-carrier modulation communication signals based upon applying the respective different permutations of the Walsh transformation matrix to the QAM signal constellation.

The controller may determine the respective different permutations of the Walsh transformation matrix based upon a transformation table. The controller may also pseudo-randomly generate the respective different permutations of the Walsh transformation matrix. The controller may iteratively generate the plurality of intermediate multi-carrier modulation communication signals based upon the respective different permutations of the Walsh transformation matrix. Also, the wireless communications device may further include an antenna coupled to the transmitter.

A related wireless communications device may include a receiver configured to receive a remote multi-carrier modulation communication signal from a remote wireless communications device, and a controller operable with the receiver to receive and decode the remote multi-carrier modulation communication signal from the remote wireless communications device based upon at least one remote signaling symbol associated with the remote multi-carrier modulation communication signal. The remote signaling symbol(s) indicates a respective Walsh transformation matrix permutation associated with the remote multi-carrier modulation communication signal from among a plurality of available Walsh transformation matrix permutations.

A related method is for using a wireless communications device to reduce a peak-to-average power ratio (PAPR) associated with a multi-carrier modulation communication signal. The method may include generating a plurality of intermediate multi-carrier modulation communication signals at the wireless communications device based upon respective different permutations of a Walsh transformation matrix, and selecting a given intermediate multi-carrier modulation communication signal for transmission from the wireless communications device as the multi-carrier modulation communication signal based upon a PAPR associated therewith.

## Brief Description of the Drawings

FIG. 1 is a schematic block diagram of a system including a wireless communications device in accordance with an example embodiment communicating via a multi-carrier modulation communication signal and providing a reduced peak-to-average power ratio (PAPR) with respect thereto.

FIG. 2 is a schematic block diagram illustrating controller and transmitter components of the wireless communications device of FIG. 1 in further detail.

FIG. 3 is a flow diagram illustrating method aspects associated with the wireless communications device of FIG. 1.

FIG. 4 is a graph of complementary cumulative distribution functions for the wireless communications device of FIG. 1 for different embodiments of the PAPR reduction approach used by the wireless communications device of FIG. 1.

FIG. 5 is a series of Walsh transformation matrices which may be used with the method of FIG. 3.

## Detailed Description of the Preferred Embodiments

The present invention will now be described more fully hereinafter with reference to the accompanying drawings, in which preferred embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like numbers refer to like elements throughout.

As noted above, various techniques are sometimes used to mitigate PAPR. One approach requires side information from the transmitter to receive and process the signal. Furthermore, coding techniques may produce symbols with a low PAPR. Yet, this approach may have certain drawbacks, including spreading distortion caused by clipping large peaks over multiple symbols. This approach may also require additional overhead and access to the physical layer to implement.

Other techniques involve clipping and filtering, saturation, compression, or limiting of the signal. More particularly, such approaches may include hard clipping or soft clipping, peak windowing (i.e., clipping and then filtering), and companding (similar to speech companding). Yet, such techniques may result in compression due to the power amplifier, and they may not work well with higher order constellations (i.e., due to a small Euclidian distance between symbols). Furthermore, this may also degrade signal quality as a result of increased IBN (in band noise) and OBN (out of band noise), which thus increases BER (bit error rate).

Still another approach is to use phase reduction carriers (PRC). That is, additional carriers are used to reduce unwanted peaks. However, this requires either additional frequency spectrum or a lower data rate (by using existing data carriers as the PRCs). Another "brute force" technique simply backs-off the transmit power level so that the input signal does not exceed the amplifier peak output level in order to avoid clipping. For example, a 10 dB larger power amplifier is required to maintain the same transmit power level for 10 dB backoff. However, this approach results in higher power consumption, as noted above.

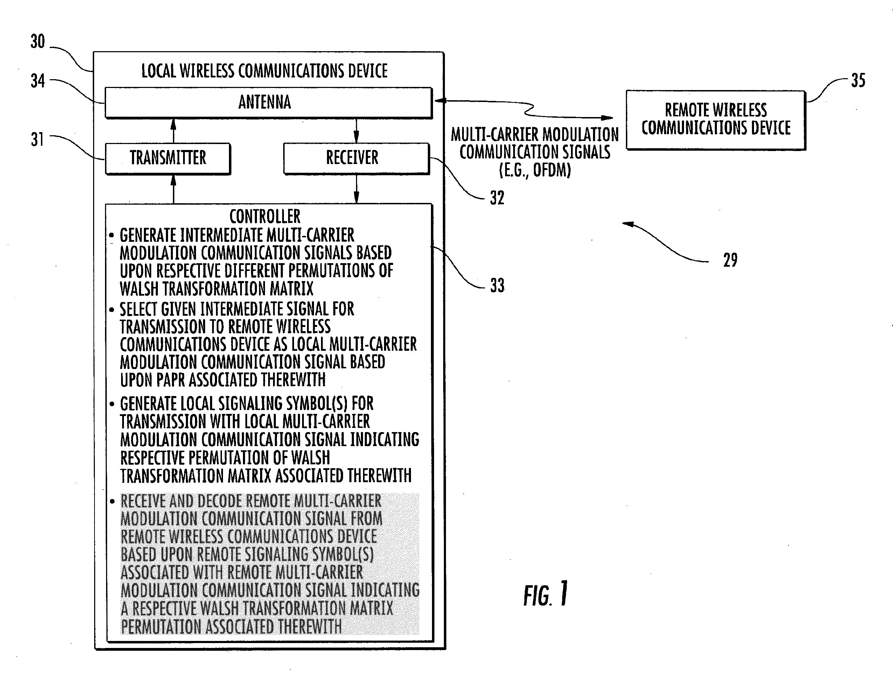

Turning now to FIGS. 1-3, an approach for PAPR reduction in accordance with an example embodiment is first described. A system 29 illustratively includes a wireless communications device 30 which uses a multi-carrier modulation communication signal, such as an OFDM signal. The wireless communications device 30 illustratively includes a transmitter 31, a receiver 32, and a controller 33 operable with the transmitter and the receiver. The wireless communications device 30 further illustratively includes an antenna 34 coupled with the transmitter 31 and receiver 32. The antenna 34 may be integral with the mobile wireless communications device 30, or it may be a separate physical antenna electrically coupled with the transmitter 31 and receiver 32.

In the illustrated example, the wireless communications device 30 is designated as a local device which transmits OFDM signals to, and receives OFDM signals from, a remote wireless communications device 35. The remote wireless communications device 35 may have similar components to those shown in the local wireless communications device 30, although in some embodiments one or both of the devices 30, 34 need not include both a transmitter and a receiver (e.g., a given device may be configured as a dedicated transmitting station or a dedicated receiving station, for example).

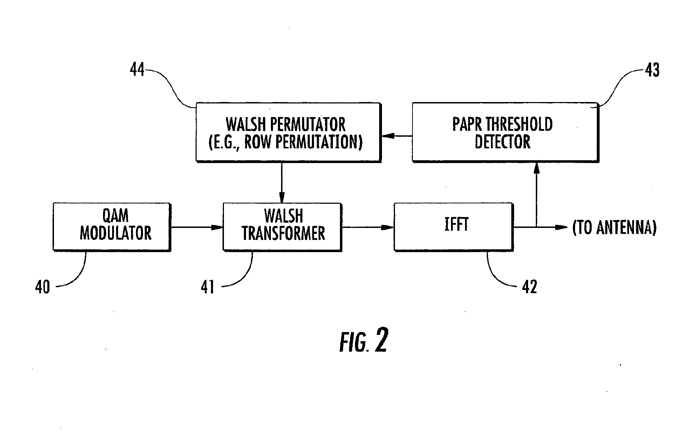

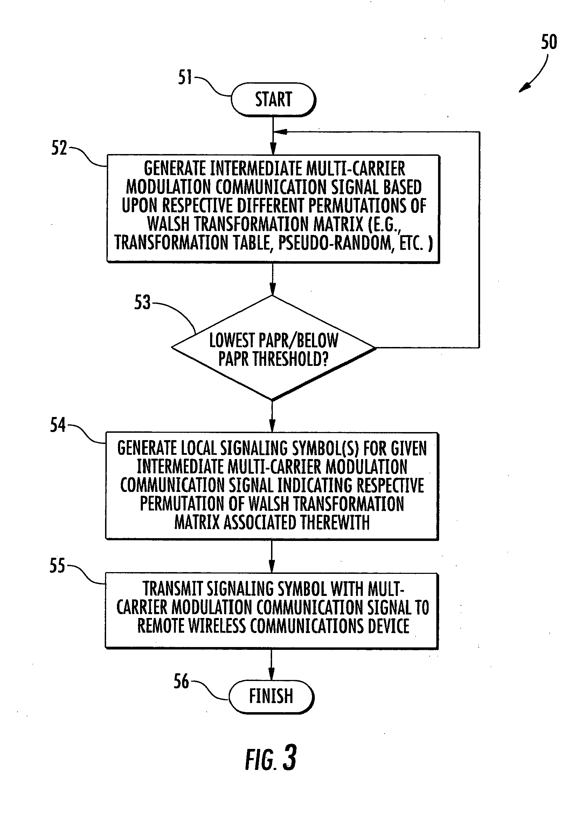

Beginning at Block 51 of the flow diagram 50 (FIG. 3), the controller 33 may be configured to generate a plurality of intermediate multi-carrier modulation communication signals based upon respective different permutations of a Walsh transformation matrix, at Block 52. In the example configuration illustrated in FIG. 2, the wireless communications device 30 illustratively includes a quadrature amplitude modulation (QAM) modulator 40 for generating a QAM signal constellation, as will be appreciated by those skilled in the art. A Walsh transformer 41 applies a Walsh transform matrix to the QAM signal constellation, which is followed by an inverse fast Fourier transform (IFFT) module 42 to generate multi-carrier (e.g., OFDM) signals to be transmitted to the remote wireless communications device 35.

However, rather than just generating a single OFDM output signal, different permutations of the Walsh transformation matrix are applied to the QAM constellation to find the one with a lowest PAPR, and/or one that has a PAPR below a desired PARP threshold, at Block 53. The PAPR is iteratively determined by a PAPR threshold detector 43, which provides feedback to a Walsh permutator module 44 to change to a next permutation of the Walsh transformation matrix as appropriate. The controller 33 selects a given intermediate multi-carrier modulation communication signal for transmission as the multi-carrier modulation communication signal meeting the desired criteria, e.g., having a PAPR below the PAPR threshold or having the lowest PAPR from among the intermediate signals, for example. Considered alternatively, Walsh permutator 44 allows for multiple copies of the Walsh-spread signal to be generated, so that the copy with a lower (or lowest) PAPR may accordingly be selected for transmission to the remote wireless communications device 35 (Block 55).

Furthermore, the controller **33** may be further configured to generate one or more signaling symbols for transmission with the multi-carrier modulation communication signal, at Block **55,** which indicate the respective permutation of the Walsh transformation matrix used to generate the multi-carrier modulation communication signal. For example, additional data bits may be sent in the signaling symbol, which allows the receiving device **35** to properly decode the sequence. In the illustrated example, each Walsh permutation is based upon different combinations or arrangements of rows in the Walsh transformation matrix, each of which will still provide an orthogonal transform. Thus, using the signaling symbols or bits to indicate the given order of rows in the Walsh transformation matrix used to generate the signal being transmitted, the receiving device **35** may accordingly determine the appropriate matrix arrangements for correctly decoding the received signal, as will be appreciated by those skilled in the art. However, it should be noted that other permutation approaches for arranging the matrix (e.g., different column configurations, etc.) may also be used. The method of FIG. 3 illustratively concludes at Block **56.** The signaling symbol(s) may optionally be encrypted in some embodiments, if desired.

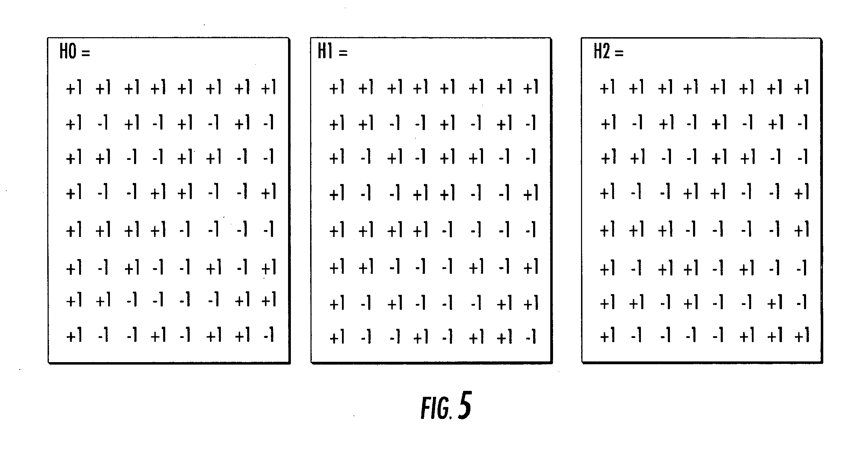

The foregoing will be further understood with reference to FIG. 5, in which an example using different arrangements of columns in Walsh transformation matrices **H0, H1, H2** is provided. In the illustrated example, the **H0** matrix is a representative 8x8 Walsh matrix. Those described later will be much larger, but a relatively small example is provided in this example for illustrative purposes. The **H1** matrix is a permutation of the **H0** matrix where the second and third columns have been swapped. The **H2** matrix identifies a different permutation of the **H0** matrix where the fourth and eighth columns have been swapped.

The respective different permutations of the Walsh transformation matrix may be selected in various ways. One approach is to use a transformation table which dictates which row combination is to be used for which transformation. Another approach is to pseudo-randomly generate the respective different permutations (e.g., row combinations) of the Walsh transformation matrix. Other suitable approaches may also be used, as will be appreciated by those skilled in the art.

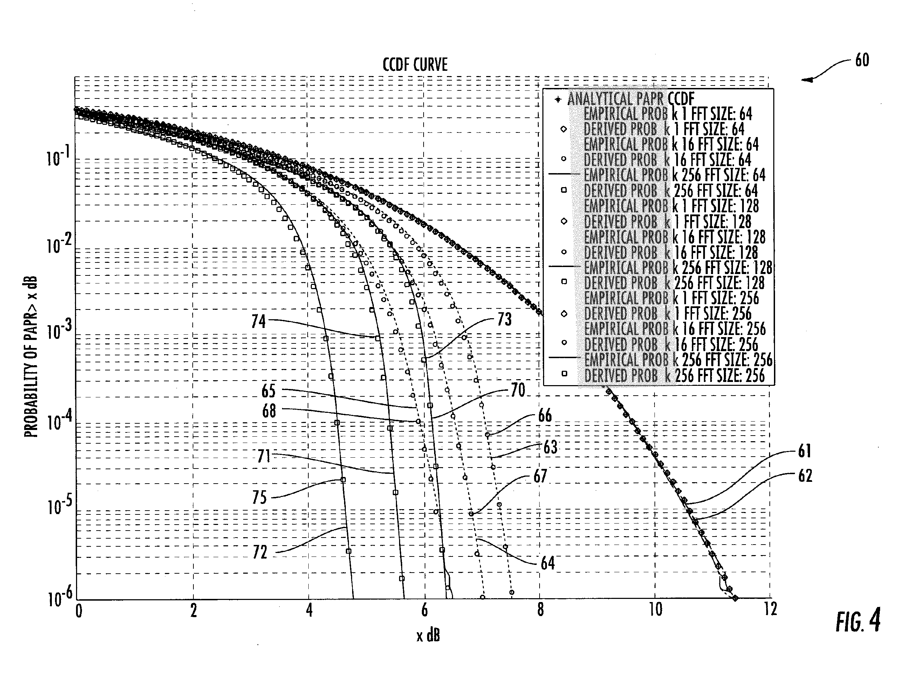

Empirical and derived probability results for an example embodiment of the above-described approach are set forth in the graph **60** of FIG. 4. The various relationships used for the derivations are set forth below, and the following terms are used in the relationships:

- $k$ = number of scrambling sequences, corresponding to a number of row combinations produced by the Walsh permutator **44;**
- $L$ = PAPR threshold, a maximum PAPR for the OFDM symbol;
- $N$ = number of sub-carriers, i.e., the number of the non-zero orthogonal subcarriers per OFDM symbol;
- $k$ = average latency, the average number of attempts per OFDM symbol to pass a PAPR threshold level $L$; and
- $P$ = probability of clipping, a probability that the PAPR exceeds a threshold level $L$ after $k$ permutations.

With respect to the example shown in FIG. 4, the relationship between the OFDM symbol and sample-based power cumulative distribution function (CDF) is:

$$F_{sym} = 1 - F_W{}^N$$

Solving for $F_W$ (sampled-based CDF):

$$F_W = \left(1 - F_{sym}\right)^{1/N}$$

The OFDM symbol power CDF after $k$ permutations is:

$$\hat{F}_{sym} = F_{sym}^k = (1 - F_W{}^N)^k$$

After substitution, the OFDM symbol (after $k$ permutations) into sample-based power CDF is:

$$\hat{F}_W = \left(1 - \hat{F}_{sym}\right)^{1/N} = \left(1 - \left(1 - \left(1 - \exp\left(-\frac{L}{2 \cdot \sigma^2}\right)\right)^N\right)^k\right)^{1/N}$$

As such, the OFDM sample complementary cumulative distribution function (CCDF) after "k" permutations is:

$$PAPR_{CCDF}(L, N, k) = 1 - \left(1 - \left(1 - \left(1 - \exp\left(-\frac{L}{2 \cdot \sigma^2}\right)\right)^N\right)^k\right)^{1/N}$$

In the graph **60,** the baseline (i.e., no PAPR reduction) empirical probability for a typical OFDM waveform (where k=1) is given by line **61,** while the derived probability values for the same waveform are indicated by diamond shapes **62.** A first set of empirical probability curves **63, 64, 65** corresponds to sixteen scrambling sequences (k=16) (with respective corresponding derived probability values indicated by circle shapes **66, 67, 68)** having respective FFT sizes of 64, 128, and 256. A second set of empirical probability curves **70, 71, 72** corresponds to two-hundred fifty-six scrambling sequences (k=256) (with respective corresponding derived probability values indicated by square shapes **73, 74, 75)** having respective FFT sizes of 64, 128, and 256.

It will therefore be appreciated that the above-described approach may advantageously improve PAPR for various QAM signal constellations, achieving up to approximately 5.1 dB of PAPR reduction in the example shown in FIG. 4. Moreover, this approach may be relatively easy to implement in existing mobile communications devices. For example, the processing required to implement this approach may be relatively straightforward, and may be accomplished using processor or field-programmable gate array (FPGA) implementations, for example.

Many modifications and other embodiments of the invention will come to the mind of one skilled in the art having the benefit of the teachings presented in the foregoing descriptions and the associated drawings. Therefore, it is understood that the invention is not to be limited to the specific embodiments disclosed, and that modifications and embodiments are intended to be included within the scope of the appended claim.

**Claims**

1.   A wireless communications device using a multi-carrier modulation communication signal and comprising:

a transmitter; and
a controller operable with said transmitter and being configured to reduce a peak-to-average power ratio (PAPR) associated with the multi-carrier modulation communication signal by at least
generating a plurality of intermediate multi-carrier modulation communication signals based upon respective different permutations of a Walsh transformation matrix, and
selecting a given intermediate multi-carrier modulation communication signal for transmission as the multi-carrier modulation communication signal based upon a PAPR associated therewith.

2.   The wireless communications device of Claim 1 wherein said controller is further configured to generate at least one signaling symbol for transmission with the multi-carrier modulation communication signal indicating the respective permutation of the Walsh transformation matrix associated therewith.

3.   The wireless communications device of Claim 2 wherein said controller is further configured to encrypt the at least one signaling symbol.

4.   The wireless communications device of Claim 1 wherein said controller selects as the given intermediate multi-carrier signal the intermediate multi-carrier modulation communication signal having a lowest PAPR associated therewith.

5.   The wireless communications device of Claim 1 wherein said controller selects the given intermediate multi-carrier modulation communication signal based upon a PAPR threshold.

6.   The wireless communications device of Claim 1 wherein the different permutations of the Walsh transformation matrix comprise at least one of different row configurations and different column configurations of the Walsh transformation matrix.

7.   A method for using a wireless communications device to reduce a peak-to-average power ratio (PAPR) associated with a multi-carrier modulation communication signal comprising:

generating a plurality of intermediate multi-carrier modulation communication signals at the wireless communications device based upon respective different permutations of a Walsh transformation matrix; and

selecting a given intermediate multi-carrier modulation communication signal for transmission from the wireless communications device as the multi-carrier modulation communication signal based upon a PAPR associated therewith.

8. The method of Claim 7 further comprising generating at least one signaling symbol at the wireless communications device for transmission with the multi-carrier modulation communication signal indicating the respective permutation of the Walsh transformation matrix associated therewith.

9. The method of Claim 7 wherein selecting comprises selecting the given intermediate multi-carrier modulation communication signal based upon a PAPR threshold.

10. The method of Claim 7 wherein the different permutations of the Walsh transformation matrix comprise at least one of different row configurations and different column configurations of the Walsh transformation matrix.

FIG. 1

EP 3 089 416 A1

FIG. 2

50

51

START

52

GENERATE INTERMEDIATE MULTI-CARRIER
MODULATION COMMUNICATION SIGNAL BASED
UPON RESPECTIVE DIFFERENT PERMUTATIONS OF
WALSH TRANSFORMATION MATRIX (E.G.,
TRANSFORMATION TABLE, PSEUDO-RANDOM, ETC. )

53

LOWEST PAPR/BELOW
PAPR THRESHOLD?

54

GENERATE LOCAL SIGNALING SYMBOL(S) FOR GIVEN
INTERMEDIATE MULTI-CARRIER MODULATION
COMMUNICATION SIGNAL INDICATING RESPECTIVE
PERMUTATION OF WALSH TRANSFORMATION
MATRIX ASSOCIATED THEREWITH

55

TRANSMIT SIGNALING SYMBOL WITH MULT-
CARRIER MODULATION COMMUNICATION SIGNAL TO
REMOTE WIRELESS COMMUNICATIONS DEVICE

56

FINISH

FIG. 3

FIG. 4

EP 3 089 416 A1

FIG. 5

Europäisches
Patentamt

European
Patent Office

Office européen
des brevets

# EUROPEAN SEARCH REPORT

Application Number

EP 15 00 1299

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/076233 A1 (LIM JONG SOO [KR] ET AL) 29 March 2012 (2012-03-29) * paragraph [0029] - paragraph [0151]; figures 3,4,5,6,7,8,9 * ----- | 1-10 | INV. H04L27/26 |
| A | WO 2008/022234 A1 (HARRIS CORP [US]) 21 February 2008 (2008-02-21) * page 19 - page 29 * ----- | 1-10 | |

TECHNICAL FIELDS
SEARCHED     (IPC)

H04L

The present search report has been drawn up for all claims

| Place of search | Date of completion of the search | Examiner |
|---|---|---|
| Berlin | 7 October 2015 | González Gutiérrez |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 15 00 1299

This annex lists the patent family members relating to the patent documents cited in the above-mentioned European search report.
The members are as contained in the European Patent Office EDP file on
The European Patent Office is in no way liable for these particulars which are merely given for the purpose of information.

07-10-2015

| Patent document cited in search report | Publication date | Patent family member(s) | Publication date |
|---|---|---|---|
| US 2012076233 A1 | 29-03-2012 | NONE | |
| WO 2008022234 A1 | 21-02-2008 | CA 2660786 A1 | 21-02-2008 |
| | | CN 101518008 A | 26-08-2009 |
| | | EP 2062410 A1 | 27-05-2009 |
| | | JP 5025728 B2 | 12-09-2012 |
| | | JP 2010501142 A | 14-01-2010 |
| | | KR 20090042964 A | 04-05-2009 |
| | | TW 200830808 A | 16-07-2008 |
| | | US 2008043861 A1 | 21-02-2008 |
| | | WO 2008022234 A1 | 21-02-2008 |

EPO FORM P0459

For more details about this annex : see Official Journal of the European Patent Office, No. 12/82

**EP 3 089 416 A1**

### Patent documents cited in the description

- US 7639747 B, Moffatt
- US 8274921 B, Moffatt
- US 7496028 B, Jung
- US 7301891 B, Park
- US 6925128 B, Corral
- US 8442137 B, Moffatt
- US 8135081 B, Moffatt
- US 7903749 B, Moffatt
- US 7822136 B, Moffatt
- US 7751488 B, Moffatt
- US 7649951 B, Moffatt